# EUROPEAN PATENT SPECIFICATION

(11) **EP 2 485 912 B1**
(45) Date of publication and mention of the grant of the patent: **18.12.2019**
(21) Application number: 10822326.4
(22) Date of filing: 06.10.2010
(51) Int. Cl.: B60K 28/16, F02D 41/02, F02D 31/00

(54) **DEVICE AND METHOD FOR INFLUENCING SLIPPAGE OF WHEELS OF A MOTOR VEHICLE**
VORRICHTUNG UND VERFAHREN ZUR BEEINFLUSSUNG DER SCHLUPFS DER RÄDER EINES KRAFTFAHRZEUGS
DISPOSITIF ET PROCÉDÉ DESTINÉS À INFLUER SUR LE DÉRAPAGE DES ROUES D'UN VÉHICULE À MOTEUR

(30) Priority: 08.10.2009 SE 0950739
(43) Date of publication of application: 15.08.2012
(73) Proprietor: Scania CV AB, 151 87 Södertälje (SE)
(72) Inventor: SUNDHOLM, Per, S-155 30 Nykvarn (SE)
(74) Representative: Scania CV AB
(86) International application number: PCT/SE2010/051078
(87) International publication number: WO 2011/043729

(56) References cited:
- EP-B1- 0 780 257
- DE-A1- 19 644 231
- DE-A1-102006 058 194
- US-A- 6 002 979
- US-A1- 2002 157 888
- US-A1- 2009 222 191
- US-B1- 6 321 154

## Description

### TECHNICAL FIELD

The present invention relates to a method for influencing slippage of wheels of a motor vehicle. The invention relates also to a computer programme product comprising programme code for a computer for implementing a method according to the invention. The invention relates also to a device for influencing slippage of wheels of a motor vehicle and to a motor vehicle which is equipped with the device.

### BACKGROUND

Today's vehicles may be equipped with systems to prevent or stop slippage of one or more of the vehicle's wheels. Some systems function according to the principle of reducing a torque of an output shaft from the engine when it is detected that one or more wheels are slipping on a running surface. A disadvantage of systems which function according to that principle is that the engine may stall if the torque is regulated down too quickly or too far.

A conceivable solution for dealing with this disadvantage may incorporate developing a new algorithm for detecting in real time a prevailing torque of the vehicle's engine and adjusting said regulation in real time in such a way that stalling is avoided. However, such a method entails a relatively large amount of computing. Such a method also involves development costs which are regarded as being too high. This solution is also regarded as too expensive and complicated to implement in today's vehicles.

Specification WO 2008/031961 A1 describes a method for engine regulation when moving off from stationary which is effective at relatively low vehicle speeds.

DE 19644231 A1 describes a slip limiter which has sensors and electric circuits for determining and evaluating the rotation of at least one powered and one unpowered wheel in order to determine their slippage. If the wheel slippage determined is above a certain limit level, a manipulated signal for engine speed is delivered to an engine control unit. This manipulated signal causes a reduction of the speed of the engine and thereby achieves a reduction in the slippage.

The document US 6321154 B1 discloses the preamble of independent claims 1 and 5.

Also documents EP 0780257 B1 and US 6002979 A are considered as relevant to define the state of the art of the present invention.

Within the vehicle industry there is for various companies a constant need for technical development of products, e.g. anti-slip systems, to enable them to maintain their position on an international market.

### SUMMARY OF THE INVENTION

An object of the present invention is to propose a novel and advantageous method for influencing slippage of wheels of a motor vehicle.

A further object of the invention is to propose a novel and advantageous device and a novel and advantageous computer programme for influencing slippage of wheels of a motor vehicle.

A further object of the invention is to propose a method, a device and a computer programme for achieving improved grip on the running surface when a vehicle is being driven at low road speeds or low engine speeds.

A further object of the invention is to propose a method, a device and a computer programme for achieving a more versatile anti-slip function of a motor vehicle.

A further object of the invention is to achieve a motor vehicle with improved running characteristics whereby the risk of undesirable consequences caused by slippage of at least one of the vehicle's wheels is minimised.

An object of the invention is to achieve a motor vehicle in which the risk of slippage of at least one of its powered wheels when the vehicle is set in motion from idling is minimised.

These objects are achieved with a method for influencing slippage of wheels of a motor vehicle according to claim 1.

An aspect of the invention provides a method for influencing slippage of wheels of a motor vehicle, comprising the step of determining whether there is a slipping state of at least one wheel of the vehicle. The method comprises also the step, of reducing a set-point value for a speed of the engine of said vehicle, based on the determination of the presence of a slipping state, which reduction is limited downwards by a lowest set-point value for said engine speed.

An advantage of the present invention is that a more robust and more operationally reliable method for influencing slippage of wheels of a motor vehicle is achieved.

Introducing a lowest limit (e.g. 300 rpm) for said reduction of the set-point value achieves an advantageous safety function, resulting with advantage both in effective cessation of ongoing slippage and in minimisation of risk of the engine stalling because of too low engine speed.

Introducing a lowest limit prevents stalling because it ensures not only low engine speed but also necessary oil pressure conditions. Introducing a lowest limit for the reduction of the set-point value for engine speed may thus result in minimal effects on oil pressure in subsystems of the engine. Any risk of impaired performance of the engine while the innovative method is being executed is thus reduced.

With advantage, excessive vibrations from the engine which are associated with too low engine speeds are avoided. Excessive vibrations of the engine may have adverse effects on various systems of the engine. For example, some mechanical systems may be exposed to excessive fatigue conditions. Excessive vibrations from the engine may also have adverse effects on a driver of the vehicle.

Avoiding excessive vibrations from the engine may also result in less environmental impact, e.g. as regards noise, which may be perceived by persons within an area around the engine.

Introducing a lowest limit for the reduction of the set-point value for the speed of the engine achieves with advantage a reduction of risk of driving belts, e.g. a fan belt of the engine, departing from their operating positions, as may be caused in operating situations where the speed of the engine is too low. Vibrations caused by unfavourable operating conditions may affect driving belts in such a way that they are displaced from their original positions and ultimately become loose or exhibit reduced operating performance.

The result is a method for quickly restoring grip to all of the vehicle's wheels by controlling the speed of its engine when slippage of at least one wheel is detected.

Speed control of the engine when at least one wheel of the vehicle is slipping reduces considerably the risk of the engine stalling as compared with techniques whereby a torque of the engine is reduced in similar circumstances. This may be perceived as positive by a driver in preventing any anxiety that the engine might stall in stressful traffic situations.

Undesired stalling may cause increased traffic safety risk and the invention has the added result of achieving a more traffic-safe vehicle.

The reduction of said set-point value is effected in a predetermined way. It is achieved by momentary reduction by a suitable value, resulting in easy adaptation to individual vehicles. Since vehicles are intended for different areas of use, the reduction of said set-point value can be adapted for different vehicle types or for individual vehicles.

As a setting of a lowest limit for said set-point value can easily be changed, the result is a method which is user-friendly with regard to updating of driving routines for the vehicle.

An aspect of the invention provides a method for influencing slippage of a motor vehicle, which method is adaptive in such a way that a control unit of the vehicle can automatically set a new lowest permissible set-point value for a speed of the engine on the basis of, for example, a prevailing climate, the temperature of the surroundings, the nature of the running surface (e.g. type of road), etc.

The reduction of said set-point value may be effected in the substantially momentary step corresponding to an engine speed within the range 50 - 250 rpm, e.g. 100 rpm. Lowering the set-point value in a relatively large step may be an effective way of stopping the slipping state.

The reduction of said set-point value is additionally effected in any desired number of steps each preceded by an evaluation of whether said slipping state has or has not ceased.

Using said evaluation to determine whether a reduction of said set-point value for engine speed is sufficient makes it possible to minimise the amount of engine speed lowering required for stopping the slipping state. This has a number of advantages. One example makes it possible with advantage to effect an unnecessarily large lowering of the set-point value, thereby as above avoiding excessive vibrations from the engine. Another example provides the advantage that a ramping of the reduced set-point value back to an original value can be effected more quickly and more effectively. Thus normal driving routines of the vehicle can be activated more quickly in cases where they become deactivated upon initiation of the innovative method for influencing slippage of a motor vehicle.

The method may comprise the step of restoring said reduced set-point value for the engine speed to the original set-point value in any desired number of steps.

The method is activated when the vehicle is being set in motion from stationary at engine idling speed or is in motion at engine idling speed.

The set-point value for the engine speed may be a pre-stored set-point value for the engine's idling speed.

The reduction of said set-point value for the engine speed may be effected in driving situations where a prevailing speed of the engine is higher than an idling speed of the engine. This is advantageous in that there may be quite a large risk of slippage of at least one wheel of the vehicle in such a driving situation.

The method is easy to implement in existing motor vehicles. Software for influencing slippage of wheels of a motor vehicle according to the invention may be installed in a control unit of the vehicle during the manufacture of the vehicle. A purchaser of the vehicle may thus have the possibility of selecting the function of the method as an option. Alternatively, software comprising programme code for effecting the innovative method for influencing slippage of wheels of a motor vehicle may be installed in a control unit of the vehicle on the occasion of upgrading at a service station, in which case the software may be loaded into a memory in the control unit. Implementing the innovative method is therefore cost-effective, particularly as no further components need be installed in the vehicle. Necessary hardware is currently already provided in the vehicle. The invention therefore represents a cost-effective solution to the problems indicated above.

Software which comprises programme code for influencing slippage of wheels of a motor vehicle is easy to update or replace. Various portions of the software which comprises programme code for influencing slippage of wheels of a motor vehicle may also be replaced independently of one another. This modular configuration is advantageous from a maintenance perspective.

An aspect of the invention provides a device according to claim 5.

An aspect of the invention provides a device for influencing slippage of wheels of a motor vehicle, comprising means for determining whether there is a slipping state of at least one wheel of the vehicle. The device comprises also means for reducing a set-point value for a speed of the vehicle's engine, based on the determination of the presence of a slipping state. According to the invention, said set-point value for said engine speed is limited downwards by a lowest set-point value for said engine speed.

The device comprises means adapted to reducing said set-point value in a predetermined way by momentary reductions.

The device may comprise means adapted to reducing said set-point value in a substantially momentary step corresponding to an engine speed within the range 50 - 250 rpm, e.g. 100 rpm.

The device further comprises means adapted to reducing said set-point value in any desired number of steps each preceded by an evaluation of whether said slipping state has or has not ceased.

The device may comprise means adapted to restoring said reduced set-point value for the engine speed to the original set-point value in any desired number of steps.

The device may comprise means adapted to reducing a set-point value for a speed of the vehicle's engine when the vehicle is being set in motion while idling.

Said set-point value for the engine speed may be a pre-stored set-point value for the engine's idling speed.

The device additionally comprises means adapted to reducing a set-point value for a speed of the vehicle's engine when the latter is being set in motion from stationary at engine idling speed or is in motion at engine idling speed.

The above objects are also achieved with a motor vehicle which comprises the features of the device for influencing slippage of wheels of a motor vehicle. The vehicle may be a truck, bus or passenger car.

An aspect of the invention provides a computer programme for influencing slippage of wheels of a motor vehicle, which computer programme comprises programme code stored on a computer-readable medium for causing an electronic control unit or another computer connected to the electronic control unit to perform the steps according to any one of claims 1-4.

An aspect of the invention provides a computer programme product comprising a programme code stored on a computer-readable medium for performing the method steps according to any one of claims 1-4 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not limited to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages thereof, the detailed description set out below should be read together with the accompanying drawings, in which the same reference notations denote similar items in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3 is a schematic diagram showing a set-point value for idling speed and a prevailing speed of the engine as a function of time, according to an embodiment of the invention;
Figure 4a is a schematic flowchart of a method for influencing slippage of at least one wheel of a motor vehicle, according to an embodiment of the invention;
Figure 4b is a schematic flowchart in more detail of a method for influencing slippage of at least one wheel of a motor vehicle, according to an embodiment of the invention; and
Figure 5 illustrates schematically a computer according to an embodiment of the invention.

### DETAILED DESCRIPTION OF THE DRAWINGS

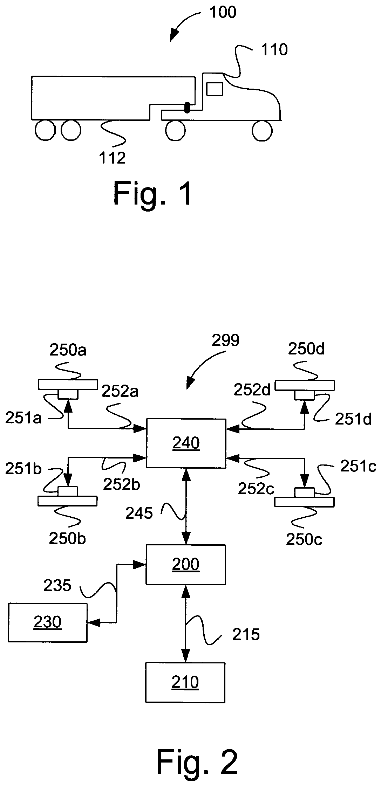

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

The term "link" refers herein to a communication link which may be a physical connection such as an opto-electronic communication line, or a non-physical connection such as a wireless connection, e.g. a radio link or microwave link.

"Slipping" state according to a first example refers herein to a state in which the absolute amount of a difference between peripheral speeds of two powered rear wheels of the vehicle exceed any desired value within a range of 0.28 - 0.70 m/s or a range of 1 - 1.5 km/h. If for example the absolute amount of the difference between a peripheral speed of a first rear powered wheel and a peripheral speed of a second rear powered wheel exceeds, for example, 0.50 m/s, a "slipping" state of the vehicle may be determined.

"Slipping" state according to a second example refers herein to a state in which the absolute amount of a difference between a peripheral speed of two powered rear wheels and a peripheral speed of two unpowered front wheels of the vehicle exceeds any desired value within a range of 0.50 - 1.50 m/s or a range of 1.8 - 5.4 km/h. For example, if the absolute amount of the difference between a substantially equal peripheral speed of the two rear powered wheels and a substantially equal peripheral speed of the two unpowered front wheels exceeds, for example, 1.0 m/s, a "slipping" state of the vehicle may be determined.

One skilled in the art will appreciate that various relevant definitions for the "slipping" state may be appropriate according to an aspect of the invention.

Figure 2 depicts a subsystem 299 of the vehicle 100. The subsystem 299 is situated in the tractor unit 110. The subsystem 299 takes for the form of an engine 230. The engine 230 may have any desired number of cylinders, e.g. four, five or six cylinders. The engine 230 is adapted to generating a torque for moving the vehicle via a number of powered wheels of the vehicle 100.

Figure 2 depicts four wheels 250a, 250b, 250c and 250d. In this example the two wheels 250a and 250b are powered rear wheels of the vehicle 100. It should be noted that the vehicle may have any desired number of wheels, e.g. four, six or eight wheels. It should also be noted that the vehicle 100 may have any desired number of powered wheels, e.g. two, four or six powered wheels.

Each of the four wheels 250a-d is provided in a conventional way with a speed sensor 251a, 251b, 251c, 251d respectively. The speed sensors 251a-d are adapted to detecting a prevailing rotation speed of the respective wheels 250a-d. Each of these speed sensors 251a-d is adapted to communication with a brake control unit 240 via a respective link 252a-d, as illustrated in Figure 2. Each of the speed sensors 251a-d is adapted to continuously sending to the brake control unit 240 signals S1a-d containing information about a prevailing rotation speed of the respective wheel 250a-d.

The brake control unit 240 is adapted to continuously receiving the signals S1a-d containing information about a prevailing rotation speed RPMa-d of the respective wheels 250a-d.

The brake control unit 240 is further adapted to determining a prevailing peripheral speed V1a-d for each of the respective wheels 250a-d on the basis of the signals S1a-d received.

By way of example, the speed sensor 251a may detect a prevailing rotation speed RPMa of the wheel 250a and send a signal S1a to the brake control unit 240, enabling the brake control unit 240 to determine a prevailing peripheral speed Via for the wheel 250a. The peripheral speeds for the various wheels 250a-d may be determined on the basis of information stored in the brake control unit 240 about the respective radii of the various wheels 250a-d.

The brake control unit 240 is adapted to determining whether there is a slipping state Slip for any of the respective wheels 250a-d. This may be done in various ways. According to an example, a prevailing rotation speed of the powered rear wheels 250a and 250b is compared with the prevailing rotation speed of the unpowered front wheels 250c and 250d. Alternatively, the prevailing rotation speeds of the powered rear wheels 250a and 250b may be compared with one another. According to a further example, a prevailing rotation speed of any desired wheel may be compared with a rotation speed of any of the other wheels.

According to a version, the brake control unit 240 is adapted to determining whether there is a slipping state Slip for any of the respective wheels 250a-d by comparing a prevailing peripheral speed of the powered rear wheels 250a and 250b with a prevailing peripheral speed of the unpowered front wheels 250c and 250d. Alternatively, the prevailing peripheral speeds of the powered rear wheels 250a and 250b may be compared with one another. According to a further example, a prevailing peripheral speed of any desired wheel may be compared with a rotation speed of any of the other wheels.

A first control unit 200 is adapted to communication with the brake control unit 240 via a link 245.

The brake control unit 240 is adapted, according to an example, to sending to the first control unit 200 a signal containing information about whether there is a slipping state Slip of any of the wheels 250a-d. The brake control unit 240 is adapted, according to an example, to sending to the first control unit 200 a signal containing information about whether there is a slipping state Slip of a specific wheel 250a-d.

According to a version, the brake control unit 240 is adapted to continuously sending to the first control unit 200 signals containing information about prevailing rotation speeds of all of the wheels 250a-d, whereupon the control unit 200 is adapted to determining whether there is a slipping state of any of the wheels 250a-d.

The first control unit 200 is adapted to communication with the engine 230 via a link 235. The first control unit 200 is adapted to controlling the engine on the basis of stored driving routines. According to this example, the first control unit 200 is adapted to, where applicable, reducing a set-point value for a speed of the engine 230. In particular, the first control unit 200 is adapted to, where applicable, reducing a set-point value for an idling speed of the engine 230 if it is determined that at least one of the vehicle wheels 250a-d is slipping.

The first control unit 200 is adapted, according to a version, to using the signals received containing information about prevailing rotation speeds of the various wheels 250a-d, or information about prevailing peripheral speeds V1a-d, as a basis for determining whether there is a slipping state of any of the wheels 250a-d.

The first control unit 200 is adapted, according to a version, to using the signals received containing information about prevailing rotation speeds of the various wheels 250a-d, or information about prevailing peripheral speeds V1a-d, as a basis for determining whether the slipping state Slip of the one or more wheels 250a-d for which a slipping state Slip was previously determined has ceased.

According to this example, the first control unit 200 is adapted to, where applicable, resetting a reduced set-point value for a speed of the engine 230. In particular, the first control unit 200 is adapted to, where applicable, resetting a reduced set-point value for an idling speed of the engine 230 if it is determined that all of the vehicle wheels 250a-d have ceased to slip.

A second control unit 210 is adapted to communication with the first control unit 200 via a link 215. The second control unit 210 may be detachably connected to the first control unit 200. The second control unit 210 may be a control unit external to the vehicle 100. The second control unit 210 may be adapted to performing the innovative method steps according to the invention. The second control unit 210 may be used for cross-loading software to the first control unit 200, particularly software for effecting the innovative method. The second control unit 210 may alternatively be adapted to communication with the first control unit 200 via an internal network in the vehicle. The second control unit 210 may be adapted to performing substantially the same sort of functions as the first control unit 200, e.g. to influencing slippage of at least one wheel of the vehicle 100.

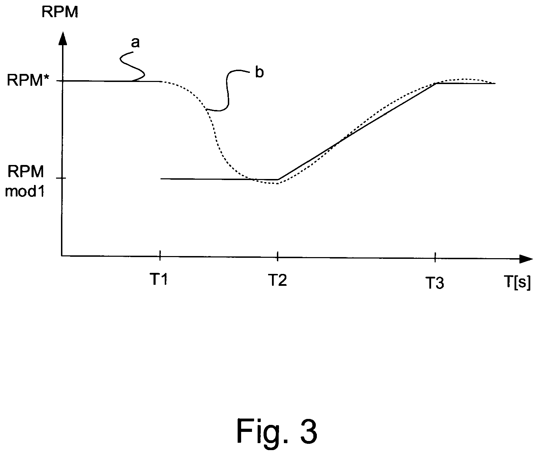

Figure 3 depicts schematically an example of a diagram in which a prevailing set-point value (graph a) for idling speed of the engine 230 is plotted as a function of time T. The set-point value for the idling speed is in rpm. The time T is in seconds.

Figure 3 also depicts schematically a diagram in which a prevailing speed (graph b) of the engine 230 is plotted as a function of time T. The prevailing engine speed is in rpm.

A set-point value RPM* for the idling speed of the engine corresponds to a basic setting of the vehicle. The set-point value RPM* is stored in the first control unit 200 or the second control unit 210. The set-point value RPM* may for example be 500 rpm. The set-point value RPM* may be any desired suitable value. The set-point value RPM* may correspond to a speed within a range of 400 - 1000 rpm.

At or just before a first time T1 it is determined that there is a slipping state of at least one of the wheels 250a-d. At the first time T1 the set-point value RPM* is reduced to a reduced set-point RPMmod1 which is lower than the set-point value RPM*. The reduced set-point RPMmod1 may be of the order of 100 rpm lower than the set-point value RPM*. The reduced set-point RPMmod1 may be any desired number of rpm lower than the set-point value RPM*.

A difference between the set-point value RPM* and the reduced set-point RPMmod1 may be within a range of 50 - 250, i.e. RPM* - RPMmod1 may be equal to any value within said range of 50 - 250.

After the set-point value RPM* has been reduced to the reduced set-point RPMmod1, a prevailing speed of the engine is automatically regulated towards the value RPMmod1, whereupon the slipping state Slip of at least one wheel ceases. The slipping state Slip ceases at a point in time between the first time T1 and a second time T2.

At time T2 a resetting of the prevailing set-point value for the engine's idling speed from the reduced set-point RPMmod1 to the set-point value RPM* begins. This may be effected by a pre-stored ramping. At a third time T3 the prevailing set-point value is reset to the original set-point value RPM*.

According to an embodiment, the set-point value for the engine's idling speed is reduced in any desired number of steps, each of which is of any desired suitable magnitude, e.g. 50 rpm per step.

The set-point values for the engine's idling speed which correspond to the respective steps are called RPMmod2, RPMmod3 and so on.

Each reduction of the set-point value for the engine's idling speed needs to be preceded by a further determination of whether the slipping state Slip determined still applies. If there is a slipping state Slip, a further reduction of the set-point value for the engine idling speed is effected. Reduction of the set-point value for the engine's idling speed may be effected in any desired number of steps until it is determined that the slipping state Slip no longer applies.

According to a version, the set-point value for the engine idling speed is limited downwards by a lowest permissible set-point value RPMmin. RPMmin may be any desired suitable value, e.g. 300 rpm.

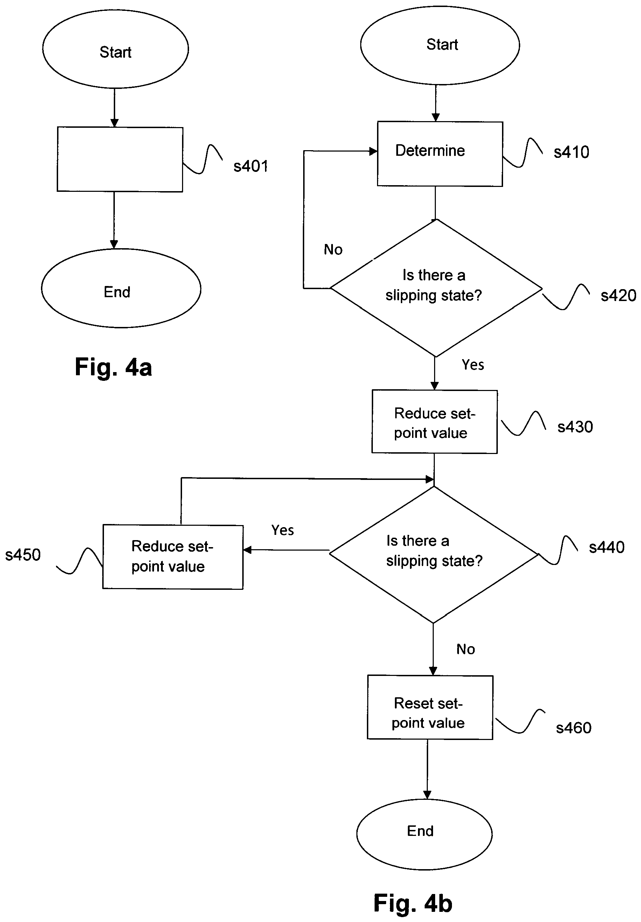

Figure 4a is a schematic flowchart of a method for influencing slippage of wheels of a motor vehicle, according to an embodiment of the invention. The method comprises a step s401 which incorporates the step of determining whether there is a slipping state Slip of at least one wheel of the vehicle and, where applicable, reducing a set-point value for a speed of said vehicle's engine, the reduction of said set-point value for said engine speed being limited downwards by a lowest set-point value for said engine speed. The method ends after step s401.

Figure 4b is a schematic flowchart in more detail of a method for influencing slippage of wheels of a motor vehicle, according to an embodiment of the invention.

The method comprises a first step s410 which incorporates the step of determining prevailing rotation speeds or peripheral speeds of at least two of the wheels 250a-d. Step s410 is followed by a step s420.

Method step s420 incorporates the step of determining whether there is a slipping state Slip of at least one of the wheels 250a-d. This may be done in various ways. If there is a slipping state Slip of at least one of the wheels 250a-d, a subsequent step s430 is performed. If there is no slipping state Slip of at least one of the wheels 250a-d, step s410 is performed again.

Method step s430 incorporates the step of reducing a prevailing set-point value RPM* for an idling speed of the engine 230 in any desired single suitable step. Step s430 is followed a step s440.

Method step s440 incorporates the step of determining whether there is still a slipping state Slip of at least one of the wheels 250a-d. This may be done in various ways. If there is no slipping state Slip of any of the wheels 250a-d, a subsequent step s460 is performed. If there is still a slipping state Slip of at least one of the wheels 250a-d, a subsequent step s450 is performed.

Method step s450 incorporates the step of reducing a prevailing set-point value for an idling speed of the engine 230 in any desired further single suitable step. According to an aspect of the invention, said reduction of said set-point value for said engine speed is limited downwards by a lowest set-point value for said engine speed. After step s450, step s440 is performed again.

Method step s460 incorporates the step of resetting a prevailing reduced set-point value for the engine's idling speed to the set-point value RPM* by ramping. When the prevailing reduced set-point value for the engine's idling speed has been reset to the set-point value RPM*, the method ends.

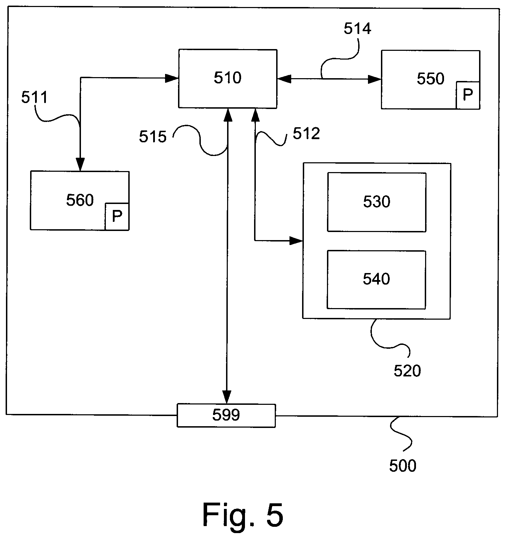

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D convertor, a time and date input and transfer unit, an event counter and an interruption counter (not depicted). The non-volatile memory 520 has also a second memory element 540.

A computer programme P is provided which comprises routines for influencing slippage of wheels of a motor vehicle according to the innovative method. The programme P comprises routines for determining whether there is a slipping state Slip of at least one of the wheels 250a-d of the vehicle 100; 110. The programme P comprises routines for, where appropriate, reducing the set-point value RPM* for a speed of the engine 230 of said vehicle 100; 110 in order to stop the slipping state of the at least one wheel, in accordance with the innovative method. The programme P may be stored in an executable form or a compressed form in a memory 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514. The links 215, 235 and 245 for example, may be connected to the data port 599 (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about prevailing rotation speeds rpm of the vehicle's wheels.

According to a version, signals received on the data port 599 contain information about prevailing peripheral speeds of the vehicle's wheels. The signals received on the data port 599 may be used by the device 500 to influence slippage of wheels of a motor vehicle.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to limit the invention to the variations described. Many modifications and variants will obviously suggest themselves to one skilled in the art. The embodiments have been chosen and described in order best to make clear the principles of the invention and its practical applications and hence to make it possible for specialists to understand the invention for various embodiments and with the various modifications appropriate to the intended use.

## Claims

1. A method for influencing slippage of wheels (250a-d) of a motor vehicle (100; 110), comprising the step of
- determining whether there is a slipping state (Slip) of at least one wheel (250a-d) of the vehicle (100; 110) and
- reducing a set-point value (RPM*) for a idling speed of the engine (230) of said vehicle (100;110), based on the determination of the presence of a slipping state,
**characterised in that** the reduction of said set-point value (RPM*) for said engine idling speed is performed in a predetermined way by momentary reductions and is effected in any desired number of steps, each preceded by an evaluation of whether said slipping state (Slip) has or has not ceased, and
wherein the set-point value (RPM*) for said engine idling speed is limited downwards by a lowest set-point value (RPMmin) for said engine idling speed, and wherein the method is activated when the vehicle is being set in motion from stationary at engine idling speed or is in motion at engine idling speed.

2. A method according to claim 1, in which said reduction of said set-point value (RPM*) is effected in a substantially momentary step corresponding to an engine idling speed within the range 50 - 250 rpm, e.g. 100 rpm.

3. A method according to any one of the foregoing claims, comprising the step:
- resetting said reduced set-point value (RPMmod1) for the engine idling speed to the set-point value (RPM*) in any desired number of steps.

4. A method according to any one of the foregoing claims, in which said reduction of said set-point value (RPM*) for the engine idling speed is effected in driving situations where a prevailing speed of the engine (230) is higher than an idling speed of the engine (230).

5. A device for influencing slippage of wheels (250a-d) of a motor vehicle (100; 110), comprising
- means (200; 210; 500) for determining whether there is a slipping state (Slip) of at least one wheel (250a-d) of the vehicle (100; 110) and
- means (200; 210; 500) for reducing a set-point value (RPM*) for an idling speed of the engine (230) of said vehicle (100; 110), based on the determination of the presence of a slipping state,
**characterised**
**in that** said set-point value (RPM*) for said engine idling speed is limited downwards by a lowest set-point value (RPMmin) for said engine idling speed, and wherein the device comprises means (200; 210; 500) adapted to reduce said set-point value (RPM*) in a predetermined way by momentary reductions, and wherein the device comprises means (200; 210; 500) adapted to reduce said set-point value (RPM*) in any desired number of steps each preceded by an evaluation of whether said slipping state (Slip) has or has not ceased, and wherein the device comprises means (200; 210; 500) adapted to reduce a set-point value (RPM*) for an idling speed of the engine (230) of the vehicle (100; 110) when the vehicle is being set in motion from stationary at engine idling speed or is in motion at engine idling speed.

6. A device according to claim 5, comprising means (200; 210; 500) adapted to reducing said set-point value (RPM*) in a substantially momentary step corresponding to an engine idling speed within the range 50 - 250 rpm, e.g. 100 rpm.

7. A device according to any one of claims 5-6, comprising means (200; 210; 500) adapted to resetting said reduced set-point value (RPMmod1) for the engine idling speed to the set-point value (RPM*) in any desired number of steps.

8. A device according to any one of claims 5-7, comprising means (200; 210; 500) adapted to reducing said set-point value (RPM*) for the engine idling speed in a driving situation where a prevailing speed of the engine (230) is higher than an idling speed of the engine (230).

9. A motor vehicle (100; 110) comprising a device according to any one of claims 5-8.

10. A motor vehicle (100; 110) according to claim 9, which vehicle is any from among truck, bus or passenger car.

11. A computer programme (P) for influencing slippage of wheels (250a-d) of a motor vehicle (100; 110), which computer programme (P) comprises programme code stored on a computer-readable medium for causing an electronic control unit (200; 500) or another computer (210; 500) connected to the electronic control unit (200; 500) to perform the steps according to any one of claims 1-4.

12. A computer programme product comprising a programme code stored on a computer-readable medium for performing the method steps according to any one of claims 1-4 when said computer programme is run on an electronic control unit (200; 500) or another computer (210; 500) connected to the electronic control unit (200; 500).

## Patentansprüche

1. Verfahren zum Beeinflussen eines Schlupfes von Rädern (250a-d) eines Kraftfahrzeugs (100; 110), umfassend den Schritt des
- Feststellens, ob ein Schlupfzustand (Slip) zumindest eines Rads (250a-d) des Fahrzeugs (100; 110) vorliegt, und
- Verringerns eines Sollwertes (RPM*) für eine Leerlaufdrehzahl des Motors (230) des Fahrzeugs (100; 110) basierend auf der Feststellung des Vorliegens eines Schlupfzustandes,
**dadurch gekennzeichnet, dass** die Verringerung des Sollwertes (RPM*) für die Motorleerlaufdrehzahl auf eine vorbestimmte Weise durch momentane Verringerungen ausgeführt wird und in jeglicher gewünschter Anzahl von Schritten durchgeführt wird, denen jeweils eine Ermittlung vorausgeht, ob der Schlupfzustand (Slip) geendet hat oder nicht, und wobei der Sollwert (RPM*) für die Motorleerlaufdrehzahl nach unten hin durch einen niedrigsten Sollwert (RPMmin) für die Motorleerlaufdrehzahl begrenzt ist, und wobei das Verfahren aktiviert wird, wenn das Fahrzeug aus einem Stillstand bei Motorleerlaufdrehzahl in Bewegung gesetzt wird oder sich bei Motorleerlaufdrehzahl in Bewegung befindet.

2. Verfahren nach Anspruch 1, bei dem die Verringerung des Sollwertes (RPM*) in einem im Wesentlichen augenblicklichen Schritt entsprechend einer Motorleerlaufdrehzahl innerhalb des Bereichs 50-250 rpm, z. B. 100 rpm, durchgeführt wird.

3. Verfahren nach einem der vorhergehenden Ansprüche, umfassend den Schritt:
- Rücksetzen des verringerten Sollwertes (RPMmod1) für die Motorleerlaufdrehzahl auf den Sollwert (RPM*) in jeglicher gewünschter Anzahl von Schritten.

4. Verfahren nach einem der hervorgehenden Ansprüche, bei dem die Verringerung des Sollwertes (RPM*) für die Motorleerlaufdrehzahl in Fahrsituationen durchgeführt wird, in denen eine vorherrschende Drehzahl des Motors (230) höher ist als eine Leerlaufdrehzahl des Motors (230).

5. Vorrichtung zum Beeinflussen eines Schlupfes von Rädern (250a-d) eines Kraftfahrzeugs (100; 110), aufweisend
- eine Einrichtung (200; 210; 500) zum Feststellen, ob ein Schlupfzustand (Slip) zumindest eines Rades (250a-d) des Fahrzeugs (100; 110) vorliegt, und
- eine Einrichtung (200; 210; 500) zum Verringern eines Sollwertes (RPM*) für eine Motordrehzahl des Motors (230) des Fahrzeugs (100; 110) basierend auf der Feststellung des Vorliegens eines Schlupfzustandes,
**dadurch gekennzeichnet, dass** der Sollwert (RPM*) für die Motorleerlaufdrehzahl nach unten hin durch einen niedrigsten Sollwert (RPMmin) für die Motorleerlaufdrehzahl begrenzt ist, wobei die Vorrichtung eine Einrichtung (200; 210; 500) aufweist, die dazu eingerichtet ist, den Sollwert (RPM*) in einer vorbestimmten Weise durch momentane Herabsetzungen zu verringern, und wobei die Vorrichtung eine Einrichtung (200; 210; 500) aufweist, die dazu eingerichtet ist, den Sollwert (RPM*) in jeglicher gewünschter Anzahl von Schritten zu verringern, denen jeweils eine Ermittlung vorausgeht, ob der Schlupfzustand (Slip) geendet hat oder nicht, und wobei die Vorrichtung eine Einrichtung (200; 210; 500) aufweist, die dazu eingerichtet ist, einen Sollwert (RPM*) für eine Leerlaufdrehzahl des Motors (230) des Fahrzeugs (100; 110) zu verringern, wenn das Fahrzeug aus einem Stillstand bei Motorleerlaufdrehzahl in Bewegung gesetzt wird oder sich bei Motorleerlaufdrehzahl in Bewegung befindet.

6. Vorrichtung nach Anspruch 5, aufweisend eine Einrichtung (200; 210; 500), die dazu eingerichtet ist, den Sollwert (RPM*) in einem im Wesentlichen augenblicklichen Schritt entsprechend einer Motorleerlaufdrehzahl innerhalb des Bereichs 50-250 rpm, z. B. 100 rpm, zu verringern.

7. Vorrichtung nach einem der Ansprüche 5-6, aufweisend eine Einrichtung (200; 210; 500), die dazu eingerichtet ist, den verringerten Sollwert (RPMmod1) für die Motorleerlaufdrehzahl in jeglicher gewünschter Anzahl von Schritten auf den Sollwert (RPM*) zurückzusetzen.

8. Vorrichtung nach einem der Ansprüche 5-7, aufweisend eine Einrichtung (200; 210; 500), die dazu eingerichtet ist, den Sollwert (RPM*) für die Motorleerlaufdrehzahl in einer Fahrsituation zu verringern, in der eine vorherrschende Drehzahl des Motors (230) höher ist als eine Leerlaufdrehzahl des Motors (230).

9. Kraftfahrzeug (100; 110) mit einer Vorrichtung nach einem der Ansprüche 5-8.

10. Kraftfahrzeug (100; 110) nach Anspruch 9, wobei das Fahrzeug jegliches ist aus einem Lastwagen, Bus oder PKW.

11. Computerprogramm (P) zum Beeinflussen eines Schlupfes von Rädern (250a-d) eines Kraftfahrzeugs (100; 110), wobei das Computerprogramm (P) auf einem computerlesbaren Medium gespeicherten Programmcode aufweist, um eine elektronische Steuereinheit (200; 500) oder einen anderen, mit der elektronischen Steuereinheit (200; 500) verbundenen Computer (210; 500) dazu zu veranlassen, die Schritte nach einem der Ansprüche 1 bis 4 auszuführen.

12. Computerprogrammprodukt umfassend einen auf einem computerlesbaren Medium gespeicherten Programmcode zum Ausführen der Verfahrensschritte nach einem der Ansprüche 1 bis 4, wenn das Computerprogramm auf einer elektronischen Steuereinheit (200; 500) oder einem anderen mit der elektronischen Steuereinheit (200; 500) verbundenen Computer (210; 500) abläuft.

## Revendications

1. Procédé pour l'influence du dérapage des roues (250a-d) d'un véhicule motorisé (100 ; 110), comprenant l'étape de
- la détermination de s'il y a un état glissant (Dérapage) d'au moins une roue (250a-d) du véhicule (100 ; 110) et
- la réduction d'une valeur de point de consigne (T/M*) pour une vitesse de ralenti du moteur (230) dudit véhicule (100 ; 110), sur base de la détermination de la présence d'un état glissant,
**caractérisé en ce que** la réduction de ladite valeur de point de consigne (T/M*) pour ladite vitesse de ralenti du moteur est exécutée d'une manière prédéterminée par des réductions momentanées et est exécutée dans un nombre quelconque souhaité d'étapes, chacune précédée d'une évaluation de si ledit état glissant (Dérapage) s'est ou ne s'est pas interrompu,
et dans lequel la valeur de point de consigne inférieure (T/M*) pour ladite vitesse de ralenti du moteur est limitée vers le bas par une valeur de consigne minimale (T/Mmin) pour ledit régime de ralenti du moteur, et dans lequel le procédé est activé lorsque le véhicule est mis en mouvement de l'arrêt à une vitesse de ralenti du moteur ou est en mouvement à une vitesse de ralenti du moteur.

2. Procédé selon la revendication 1, dans lequel ladite réduction de ladite valeur de point de consigne (T/M*) est exécutée dans une étape sensiblement momentanée correspondant à une vitesse de ralenti du moteur dans la plage de 50 - 250 T/M, p. ex. 100 T/M.

3. Procédé selon l'une quelconque des revendications précédentes, comprenant l'étape de :
- la réinitialisation de ladite valeur de point de consigne réduite (T/Mmod1) pour la vitesse de ralenti du moteur à la valeur de point de consigne (T/M*) dans un nombre quelconque d'étapes souhaité.

4. Procédé selon l'une quelconque des revendications précédentes, dans lequel ladite réduction de ladite valeur de point de consigne (T/M*) pour la vitesse de ralenti du moteur est exécutée dans des situations de conduite où une vitesse en vigueur du moteur (230) est supérieure à une vitesse de ralenti du moteur (230) .

5. Dispositif pour l'influence du dérapage des roues (250a-d) d'un véhicule motorisé (100 ; 110), comprenant
- des moyens (200 ; 210 ; 500) pour la détermination de s'il y a un état glissant (Dérapage) d'au moins une roue (250a-d) du véhicule (100 ; 110) et
- des moyens (200 ; 210 ; 500) pour la réduction d'une valeur de point de consigne (T/M*) pour une vitesse de ralenti du moteur (230) dudit véhicule (100 ; 110), sur base de la détermination de la présence d'un état glissant,
**caractérisé en ce que** ladite valeur de point de consigne (T/M*) pour ladite vitesse de ralenti du moteur est limitée vers le bas par une valeur de point de consigne la plus faible (T/Mmin) pour ladite vitesse de ralenti du moteur, et
dans lequel le dispositif comprend des moyens (200 ; 210 ; 500) adaptés pour réduire ladite valeur de point de consigne (T/M*) de manière prédéterminée par des réductions momentanées, et dans lequel le dispositif comprend des moyens (200 ; 210 ; 500) adaptés pour réduire ladite valeur de point de consigne (T/M*) dans un nombre quelconque d'étapes, chacune précédée par une évaluation de si ledit état glissant (Dérapage) s'est ou ne s'est pas interrompu, et dans lequel le dispositif comprend des moyens (200 ; 210 ; 500), adaptés pour réduire la valeur de point de consigne (T/M*) pour une vitesse de ralenti du moteur (230) du véhicule (100 ; 110) lorsque le véhicule est mis en mouvement de l'arrêt à une vitesse de ralenti du moteur ou est en mouvement à une vitesse de ralenti du moteur.

6. Dispositif selon la revendication 5, comprenant des moyens (200 ; 210 ; 500) adaptés à la réduction de ladite valeur de point de consigne (T/M*) dans une étape sensiblement momentanée correspondant à une vitesse de ralenti du moteur dans la plage de 50 - 250 T/M, p. ex. 100 T/M.

7. Dispositif selon l'une quelconque des revendications 5-6, comprenant des moyens (200 ; 210 ; 500) adaptés pour la réinitialisation de ladite valeur de point de consigne réduite (T/Mmod1) pour la vitesse de ralenti du moteur à la valeur de point de consigne (T/M*) dans un nombre quelconque d'étapes souhaité.

8. Dispositif selon l'une quelconque des revendications 5-7, comprenant des moyens (200 ; 210 ; 500) adaptés à la réduction de ladite valeur de point de consigne (T/M*) pour la vitesse de ralenti du moteur dans une situation de conduite où une vitesse en vigueur du moteur (230) est supérieure à une vitesse de ralenti du moteur (230).

9. Véhicule à moteur (100 ; 110) comprenant un dispositif selon l'une quelconque des revendications 5-8.

10. Véhicule à moteur (100 ; 110) selon la revendication 9, lequel véhicule est l'un quelconque d'un camion, d'un bus ou d'une voiture particulière.

11. Programme informatique (P) pour l'influence du dérapage de roues (250a-d) d'un véhicule à moteur (100 ; 110), lequel programme informatique (P) comprend un code de programme stocké sur un support lisible par ordinateur pour amener une unité de commande électronique (200 ; 500) ou un autre ordinateur (210 ; 500) connecté à l'unité de commande électronique (200 ; 500) à exécuter les étapes selon l'une quelconque des revendications 1-4.

12. Produit de programme informatique contenant un code de programme stocké sur un support lisible par ordinateur pour l'exécution des étapes du procédé selon l'une quelconque des revendications 1-4 lorsque ledit programme informatique est exécuté sur une unité de commande électronique (200 ; 500) ou sur un autre ordinateur (210 ; 500) connecté à l'unité de commande électronique (200 ; 500).
